(19) **Europäisches Patentamt**
**European Patent Office**
**Office européen des brevets**

(11) **EP 4 249 852 B1**

(12) **EUROPEAN PATENT SPECIFICATION**

(45) Date of publication and mention
of the grant of the patent:
**10.12.2025 Bulletin 2025/50**

(21) Application number: **21894885.9**

(22) Date of filing: **08.10.2021**

(51) International Patent Classification (IPC):
**G01C 21/36** *(2006.01)*    **G01C 21/20** *(2006.01)*
**G01C 21/16** *(2006.01)*    **G01C 21/00** *(2006.01)*

(52) Cooperative Patent Classification (CPC):
**G01C 21/206**

(86) International application number:
**PCT/KR2021/013896**

(87) International publication number:
**WO 2022/108113 (27.05.2022 Gazette 2022/21)**

(54) **METHOD AND DEVICE FOR DISPLAYING SCREEN ACCORDING TO INDOOR POSITIONING**

VERFAHREN UND VORRICHTUNG ZUR ANZEIGE EINES BILDSCHIRMS IN ABHÄNGIGKEIT VON
DER INNENRAUMPOSITIONIERUNG

PROCÉDÉ ET DISPOSITIF D'AFFICHAGE D'ÉCRAN SELON UN POSITIONNEMENT INTÉRIEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.11.2020 KR 20200155904**

(43) Date of publication of application:
**27.09.2023 Bulletin 2023/39**

(73) Proprietor: **Vestellalab Inc.**
**Seoul 04147 (KR)**

(72) Inventors:
• **JUNG, Sangsu**
**Uiwang-si, Gyeonggi-do 16025 (KR)**
• **LEE, Eunjung**
**Uiwang-si, Gyeonggi-do 16025 (KR)**

• **LEE, Young Soo**
**Gunpo-si, Gyeonggi-do 15856 (KR)**
• **SINGH, Dhananjay**
**Yongin-si, Gyeonggi-do 17035 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
**JP-A- 2015 528 897     JP-B2- 5 957 906
KR-A- 20100 024 631     KR-A- 20190 112 929
KR-A- 20190 112 929     KR-B1- 100 978 060
KR-B1- 100 978 060**

## Description

Technical Field

The present disclosure relates to a method and device for displaying a screen (hereinafter, referred to as a screen display method and device) according to indoor positioning.

Background Art

In general, a position may be determined using a global positioning system (GPS) signal outdoors. In an outdoor environment, the influence of structures or obstacles that interfere with signal transmission and reception is relatively small, and the error in signal transmission and reception is relatively not large. However, in indoor positioning, there is a problem in that positioning accuracy is lowered due to GPS signal reception failures or errors caused by structures, such as ceilings, walls, and pillars.

As a positioning method developed in response to this, there are trilateration or fingerprint methods using positioning sensors such as beacons and Wi-Fi, camera techniques, and the like. However, there is a limit to improving the accuracy of positioning due to an error generated by a signal of the positioning sensor and surrounding environment.

Recently, a navigation device is provided in a moving object such as a vehicle or provides a navigation function in a separate mobile device. The navigation device performs route guidance to a destination set by a vehicle driver while moving along with a moving object. However, as described above, because the accuracy of positioning is deteriorated due to errors in positioning data in an indoor environment, there is a problem in maintaining accuracy even in a screen display method according to indoor positioning, and accordingly, there are limitations in providing accurate real-time navigation services to users.

KR 10-0978060 B1 discloses a method for position adjustment in an indoor position determination system. In the document it is described that, when a position is changed, an indoor position determination system performs correction of position information based on movement speed, based on acceleration variation for each axis of an inertial sensor, the indoor measurement system corrects the position information, based on the candidate position, the indoor measurement system searches a candidate link from indoor network data, and if the candidate link is not searched, the indoor measurement system identifies a previous compensated coordinate as a current position.

KR 2019 0112929 A discloses a method for estimating a direction of movement. In the document it is described that whether the direction of movement of a mobile body has switched is determined by using a measurement value indicating an angular velocity of the mobile body received from an inertial measurement device, and if it is determined that the direction of movement of the mobile body has switched, the measurement value is calculated to update the direction information of the current cycle based on a direction information set in the previous cycle.

Disclosure

Technical Problem

Embodiments of the present disclosure are intended to provide a screen display method and device according to indoor positioning, which provides not only the improved accuracy even in an indoor environment but also smoother visual guidance effect to users.

Technical Solution

The invention is defined by the appended claims.

Advantageous Effects

According to embodiments of the present disclosure, a screen display method and device with improved real-time accuracy may be provided by using a positioning algorithm using node data in a movable path.

In addition, according to embodiments of the present disclosure, smoother visual effects and high-quality navigation services may be provided to users by correcting an error occurring when performing an indoor positioning algorithm.

Description of Drawings

FIG. 1 is a schematic diagram illustrating the configuration of a screen display system according to an embodiment of the present disclosure.
FIG. 2 is a configuration diagram illustrating, in more detail, a screen display system according to an embodiment of the present disclosure.
FIG. 3 is a configuration diagram illustrating the configuration of a sensor unit according to an embodiment of the present disclosure.
FIG. 4 is a diagram for explaining node data according to an embodiment of the present disclosure.
FIG. 5 is a diagram for explaining a single path display method according to an embodiment of the present disclosure.
FIG. 6 is a diagram for explaining a single path display method according to another embodiment of the present disclosure.
FIG. 7 is a diagram for explaining a display mode according to an embodiment of the present disclosure.

FIG. 8 is a diagram for explaining a display mode according to another embodiment of the present disclosure.

FIG. 9 is a diagram for explaining a display method during general rotation.

FIG. 10 is a diagram for explaining a screen display method during rotation according to an embodiment of the present disclosure.

FIG. 11 is a diagram for explaining a screen display method during rotation according to another embodiment of the present disclosure.

FIG. 12 is a diagram for explaining a method of generating a correction UI according to whether to stop displaying the moving object UI, according to an embodiment of the present disclosure.

FIG. 13 is a flowchart illustrating a screen display method according to an embodiment of the present disclosure.

FIG. 14 is a flowchart illustrating, in more detail, operation S300, which is a partial operation of the screen display method according to an embodiment of the present disclosure.

Mode for Invention

Because various changes can be applied to the present disclosure and the present disclosure can have various embodiments, particular embodiments are illustrated in the drawings and described in detail. Effects and features of the present disclosure and methods of securing them may be apparent with reference to the embodiments described below in detail with reference to the drawings. However, the present disclosure is not limited to the embodiments disclosed below, but may be implemented in various forms.

Hereinafter, embodiments of the present disclosure are described in detail with reference to the accompanying drawings, and when described with reference to the drawings, the same or corresponding components are given the same reference numerals, and duplicate descriptions thereof are omitted.

It will be understood that although the terms "first," "second," etc. may be used herein to describe various components, these components should not be limited by these terms. These components are only used to distinguish one component from another. In addition, singular expressions include plural expressions unless they are explicitly and differently specified in context. In addition, it will be further understood that the terms "includes or comprises" and/or "including or comprising" used in the present disclosure specify the presence of stated features or components, but do not preclude the presence or addition of one or more other components or features. Sizes of components in the drawings may be exaggerated or reduced for convenience of explanation. For example, because sizes and thicknesses of components in the drawings are arbitrarily illustrated for convenience of explanation, the present disclosure is not limited thereto.

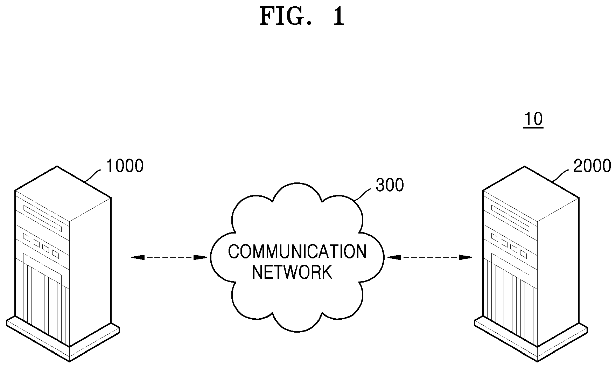

FIG. 1 is a schematic diagram illustrating the configuration of a screen display system 10 according to an embodiment of the present disclosure.

The screen display system 10 according to an embodiment of the present disclosure may include a screen display server 1000 and an indoor space server 2000. The two servers, that is, the screen display server 1000 and the indoor space server 2000, may communicate with each other through a communication network 300 and may exchange data with each other.

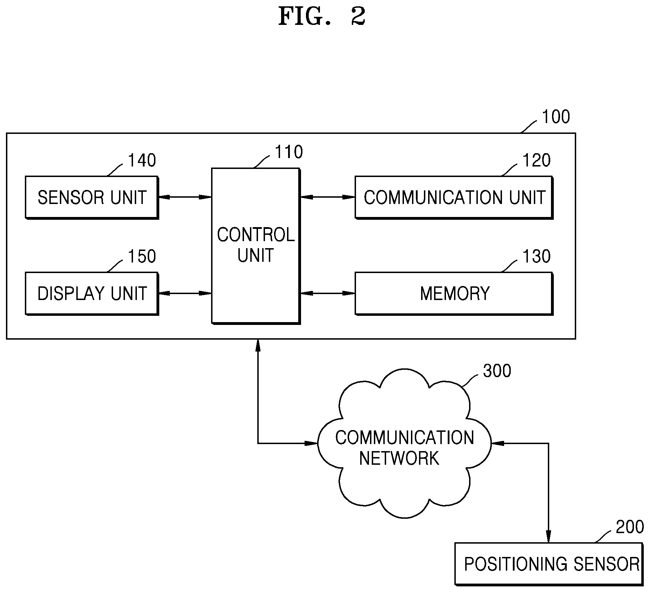

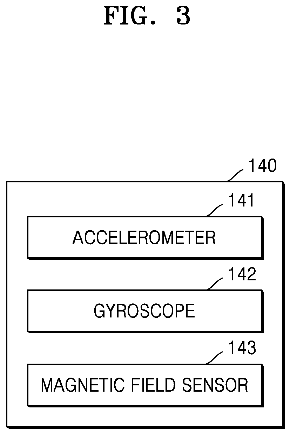

The screen display server 1000 may perform indoor positioning of a moving object moving in an indoor space. To this end, the screen display server 1000 may include a screen display device 100 shown in FIGS. 2 and 3, which will be described in detail with reference to FIGS. 2 and 3 to be described below. The screen display server 1000 may be a server that manages a positioning application installed in the screen display device 100. The screen display server 1000 and the screen display device 100 may exchange data with each other through the application.

The indoor space server 2000 is a server related to an indoor space in which a moving object to be positioned moves. The indoor space of the present disclosure may be various spaces having obstacles to receiving GPS signals, such as indoor/underground parking lots, tunnels, underground roads, underground shopping malls, and inside buildings. The indoor space server 2000 may be a local server existing in each individual indoor space or a central server that manages information on several indoor spaces. Hereinafter, for example, it may be described that the indoor space is an indoor parking lot and the indoor space server 2000 is a parking lot server. The indoor space server 2000 may include a positioning sensor 200 as shown in FIG. 2 for indoor positioning of a moving object.

According to embodiments, the operating subject of the screen display server 1000 may be the same as that of the indoor space server 2000.

The communication network 300 may refer to a communication network that mediates data transmission and reception between components of the screen display system 10. Examples of the communication network 300 may include wired networks, such as local area networks (LANs), wide area networks (WANs), metropolitan area networks (MANs), and integrated service digital networks (ISDNs), or wireless networks, such as Wi-Fi, wireless LANs, CDMA, Bluetooth, and satellite communication. However, the scope of the present disclosure is not limited thereto.

Hereinafter, the configuration of the screen display system 10 according to an embodiment will be described in more detail with reference to both FIG. 2 and FIG. 3.

FIG. 2 is a configuration diagram illustrating, in more detail, a screen display system 10 according to an embodiment of the present disclosure, and FIG. 3 is a configuration diagram illustrating the configuration of sensor unit 140 according to an embodiment of the present disclosure.

The screen display device 100 is a device corresponding to a moving object such as a vehicle, and maybe a mobile terminal such as a mobile phone or a tablet PC owned by the owner of the vehicle, or an electronic device connected to or built into the vehicle. An application for performing an indoor positioning method for a moving object according to an embodiment of the present disclosure may be installed in the screen display device 100. Hereinafter, the concept of the position of the moving object and the concept of the position of the screen display device 100 may be used interchangeably for description.

The screen display device 100 includes a control unit 110, a communication unit 120, a memory 130, a sensor unit 140, and a display unit 150. In addition, although not shown in the drawings, the screen display device 100 may further include an input/output interface other than the display unit 150.

The control unit 110 may perform an operation of overall controlling the screen display device 100. A specific operation of the control unit 110 will be described in more detail with reference to related drawings to be described below.

The control unit 110 may include all types of devices capable of processing data, such as a processor. Here, 'processor' may refer to, for example, a data processing device embedded in hardware, which has a physically structured circuit to perform functions expressed by codes or instructions included in a program. Examples of the data processing device embedded in hardware may include a microprocessor, a central processing unit (CPU), a processor core, a multiprocessor, an application-specific integrated circuit (ASIC), and a field programmable gate array (FPGA). However, the scope of the present disclosure is not limited thereto.

The communication unit 120 may be a device including hardware and software necessary for transmitting and receiving control signals or data through the communication network 300 according to various types of communication methods. The communication unit 120 may communicate with various types of external devices and servers, such as the positioning sensor 200 of FIG. 2 or the indoor space server 2000.

The memory 130 temporarily and/or permanently stores all types of data generated and processed by the screen display device 100. The memory 130 may store program applications installed in the screen display device 100, data, commands, etc. and may store all types of data input and output through the screen display device 100. The memory 130 may include a permanent mass storage device, such as a random access memory (RAM), a read only memory (ROM), or a disk drive, a flash storage medium, a solid state drive (SSD), or the like. However, the scope of the present disclosure is not limited thereto.

Here, the sensor unit 140 will be described with reference to FIG. 3 in addition to FIG. 2. The sensor unit 140 is a sensor for obtaining movement information including the position of a moving object, whether or not the moving object has moved, the movement direction/angle of the moving object, and the posture of the moving object, and may include a plurality of sensors for sensing an internal or external state of the screen display device 100. The sensor unit 140 may include at least one of an accelerometer 141, a gyroscope 142, and a magnetic field sensor 143. First sensing data about the movement information of a moving object may be obtained through the sensor unit 140.

The accelerometer 141 senses the acceleration of a moving object and may be a three-axis sensor of X-axis, Y-axis, and -axis. The gyroscope 142 senses the angular velocity of a moving object and may be a three-axis sensor of Rx, Ry, and Rz. The accelerometer 141 may measure the movement inertia (g ($1g = 9.8$ m/s$^2$) as an example of the unit thereof) of a moving object using the acceleration of the moving object, and the gyroscope 142 may measure the rotational inertia and/or rotation rate (deg/sec as an example of the unit thereof) using the angular velocity of the moving object. For example, the control unit 110 may obtain the movement information of a moving object by using sensed values of the accelerometer 141 and the gyroscope 142, and the movement information may include rotation information (angular change amount) including information about a roll angle, a pitch angle, and a yaw angle of a moving object, and speed information.

The magnetic field sensor 143 may measure the azimuth of a moving object. The range of variation of a sensed value obtained by the magnetic field sensor 143 decreases when the moving object is stationary without moving. When the change value of an outputted sensed value is equal to or less than a preset criterion, it may be determined that the vehicle is in a stationary state. The control unit 110 may reduce an error when determining whether a moving object moves or rotates by using a sensed value of the magnetic field sensor 143 in addition to sensed values of the accelerometer 141 and the gyroscope 142. In this way, the screen display device 100 may determine motion and speed information of a moving object in various directions in three dimensions including three axes of the moving object based on the first sensing data obtained through the sensor unit 140.

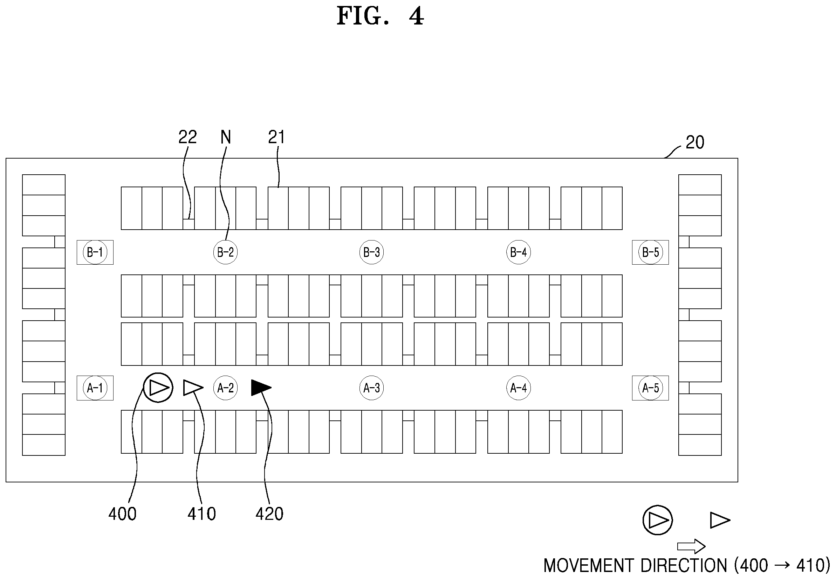

Referring back to FIG. 2, the display unit 150 may display data input and output through the screen display device 100. Positioning data processed and output by an indoor positioning method according to an embodiment of the present disclosure may be displayed through the display unit 150 in an output method according to the operation of a positioning application stored in the screen display device 100. FIGS. 4 to 8 to be described below are examples of display screens output through the display unit 150.

According to embodiments, the screen display device 100 may be provided separately from the screen display server 1000 outside the screen display server 1000.

The indoor space server 2000 may include the positioning sensor 200 installed in an indoor space for indoor positioning of a moving object. For example, the positioning sensor 200 may be a beacon module that transmits a beacon signal including a beacon ID through the communication network 300. The beacon signal may include a universally unique identifier (UUID), a major ID, a minor ID, and a received signal strength indication (RSSI). For example, the major ID and the minor ID may consist of three digit numbers, and a unique number for each floor may be assigned to the hundreds' digit and a unique number for each beacon may be assigned to the tens' digit and the ones' digit. The RSSI corresponds to the strength of the beacon signal. In this case, the positioning sensor 200 may periodically wirelessly transmit the beacon signal to the screen display server 1000 through all available wireless communication networks 300 such as Wi-Fi, Bluetooth, Zigbee, Long Term Evolution (LTE), and 3G.

Hereinafter, data obtained by the positioning sensor 200 is referred to as second sensing data, and the second sensing data may refer to the beacon signal.

FIG. 4 is a diagram for explaining node data according to an embodiment of the present disclosure, and is an example of a display screen displayed through the display unit 150.

On the display screen, an indoor space 20, a parking surface 21, an obstacle 22, and the like are shown in the form of data-processed images, and the parking surface 21 and the obstacle 22 may be appropriately disposed in the actual indoor space 20. Hereinafter, the indoor space 20 is described as an example of a parking lot.

The control unit 110 sets node data including information about the position of the positioning sensor 200, according to a preset rule, on a movement path through which a moving object is movable with respect to the indoor space 20.

In the indoor space 20, the rest of the space excluding the parking surface 21 and the obstacle 22 may be a movement path through which a moving object is movable. A plurality of nodes N indicating the position of the positioning sensor 200 (refer to FIG. 2) installed according to a preset rule are shown on the movement path. Hereinafter, the 'position of the node N' and the 'position of the positioning sensor 200' may be used interchangeably for description. Positioning sensors 200 may be installed at regular intervals according to a preset rule on a movement path. Nodes may also be set on the parking surface 21 according to an embodiment.

For example, in FIG. 4, the plurality of nodes N includes nodes A on a first movement path and nodes B on a second movement path, and the nodes A include nodes A-1, A-2, A-3, A-4, and A-5 and the nodes B include nodes B-1, B-2, B-3, B-4, and B-5. However, the position and number of the plurality of nodes N are not limited thereto.

Node data according to an embodiment of the present disclosure relates to information about a position in which the positioning sensor 200 is installed, and the position information may include an ID of the positioning sensor 200, information about the position of each of the plurality of nodes N, and information about connection between different nodes.

The plurality of nodes N may include a first node where a positioning operation starts, a final node where the positioning operation ends, a rotation node located at an intersection such as a three-way intersection or a crossroads, and an intermediate node located between the nodes. For example, the first node may correspond to an entrance to an indoor space, and the final node may correspond to an exit of the indoor space. In FIG. 4 , the node A-1 may be the first node, the node B-1 may be the final node, the nodes A-5 and B-5 may be rotation nodes, and other nodes may be intermediate nodes. In this way, the positioning sensor 200 may be installed on a straight path of a moving object or a point where the direction of the moving object is changed, such as an intersection. In this case, when the distance between two adjacent positioning sensors 200 on the straight path is greater than a certain criterion, an additional positioning sensor 200 may be installed between the two adjacent positioning sensors 200 to increase the accuracy of positioning.

The control unit 110 may use at least one of the node data, the first sensing data obtained through the sensor unit 140, and the second sensing data obtained through the positioning sensor 200 provided in the indoor space 20 and obtain first positioning data for determining a first section in which the moving object is currently located. For example, the first positioning data may include current position coordinates as the current position of the moving object (at the starting point of a positioning operation), information about the distance between the screen display device 100 and the positioning sensor 200, and the like.

Thereafter, the control unit 110 may determine whether the first positioning data satisfies a preset reference value for a boundary node defining the first section. For example, when the first section is a section between the node A-2 and the node A-3 in FIG. 4, the two nodes A-2 and A-3 are boundary nodes of the first section. For example, whether the first positioning data satisfies the reference value may be determined based on whether a calculated distance between the positioning sensor 200 and the screen display device 100 is equal to or less than a certain value, that is, whether the moving object approaches a specific positioning sensor 200 within a certain distance. If it is determined that the first positioning data satisfies the reference value, a next positioning operation (by a next positioning sensor 200) may be performed. According to an embodiment, a condition for satisfying the reference value may be how continuously and how frequently the screen display device 100 receives sensor signals from the various positioning sensors 200, and may be changed within various ranges that facilitate positioning. According to an embodiment, the condition for satisfying the reference value may be whether the screen display device 100 and the various positioning sensors 200 are relatively close to each other by using the RSSI data, and this may be used together with the above-mentioned frequency.

In FIG. 4, the moving object may be displayed as a moving object user interface (UI) 400 on the display screen according to a positioned position. A first UI object 410 indicates a positioned position of the moving object, and a second UI object 420 indicates an actual position of the moving object. The moving object UI 400 refers to the position of a moving object displayed on the display screen based on the positioned position represented by the first UI object 410 at any point in time. The movement direction of the moving object may be interpreted as a direction from the moving object UI 400, which is a display position, toward the first UI object 410, which is a positioned position.

Thereafter, the control unit 110 may determine a subsequent display operation by determining whether the moving object rotates at a first target node. A specific example of determining the subsequent display operation will be described with reference to the drawings to be described below.

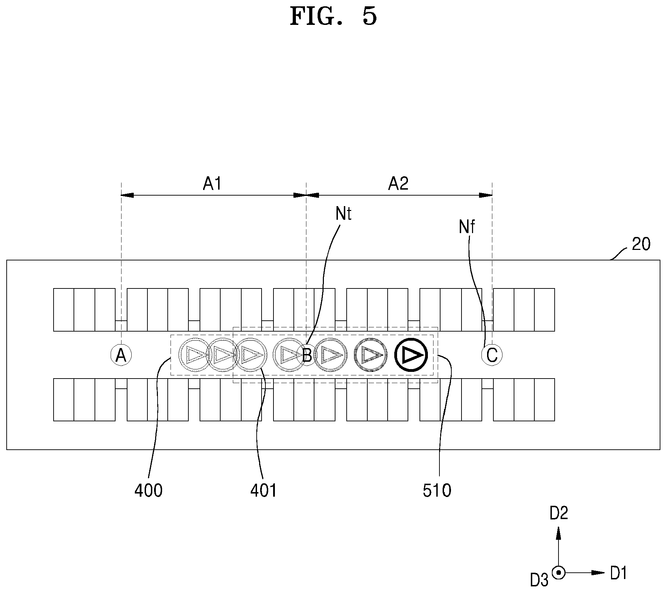

FIG. 5 is a diagram for explaining a single path display method according to an embodiment of the present disclosure.

The control unit 110 of the screen display device 100 may generate a first correction UI 510 that moves in a first direction D1 in which the moving object 400 moves, based on the first positioning data of the moving object 400 at a first point in time, and display the first correction UI 510. Hereinafter, the first correction UI 510 may refer to a correction UI generated in a straight section (single path section). The first correction UI 510 may be displayed with a speed corrected in comparison with an actual speed of the moving object from a first start node to a first end node.

More specifically, the control unit 110 may generate and display the first correction UI 510 through operations described below. First, the first start node is determined based on the first positioning data. A first target node, at which the first positioning data obtained using at least one of node data, first sensing data by the sensor unit 140, and second sensing data by the positioning sensor 200 satisfies a preset reference value, may be determined.

For example, in FIG. 5, the first start node may be determined to be a node 401, which is a display position based on the first positioning data at any point in time. Here, the 'node' of the 'start node' or 'end node' may be not only a node corresponding to the installation position of the positioning sensor 200 included in the node data, but also may correspond to the position of the moving object UI 400 displayed at any point in time. It is assumed that while the moving object is moving in the first direction D1, the control unit 110 recognizes a node (i.e., a node B in FIG. 5) that satisfies a preset reference value in the start node 401. Then, the node B may be determined to be a first target node Nt.

Thereafter, the control unit 110 may determine the first end node, which is an end node of the first correction UI 510, based on the first target node Nt. In this case, the first end node may be determined to be the first target node Nt or a node next adjacent to the first target node Nt in the first direction D1. For example, because the first target node Nt is recognized as the node B at the display position 401 of the moving object, the first end node may be the node B or a node C. When the first end node is the node B, the first correction UI 510 may be displayed in a first section A1, and when the first end node is the node C, the first correction UI 510 may be displayed in the first section A1 and a second section A2. FIG. 5 shows an embodiment in which a first end node Nf is the node C that is a next node adjacent to the first target node Nt in the first direction D1.

Thereafter, the control unit 110 generates and displays a first correction UI 510 displayed at a uniform speed from the first start node 401 to the first end node. The uniform speed may be a speed corrected in comparison with the speed of an actual moving object. The actual moving object often does not move at a uniform speed in a certain section, and even when the actual moving object moves at a uniform speed, it is difficult for positioning data to be accurately collected in real time due to various factors, such as an indoor environment with obstacles, communication quality and condition, etc. Accordingly, the embodiments of the present disclosure may provide a navigation service accompanied by more smooth and comfortable visual effects to users by determining start and end points based on positioning data obtained based on node data and sensing data and providing a correction UI (correction animation) in which the moving object UI moves at a uniform speed in a section between the start point and the end point. According to another embodiment, a plurality of sections displayed at different uniform speeds may be included in the entire section where a correction UI is displayed.

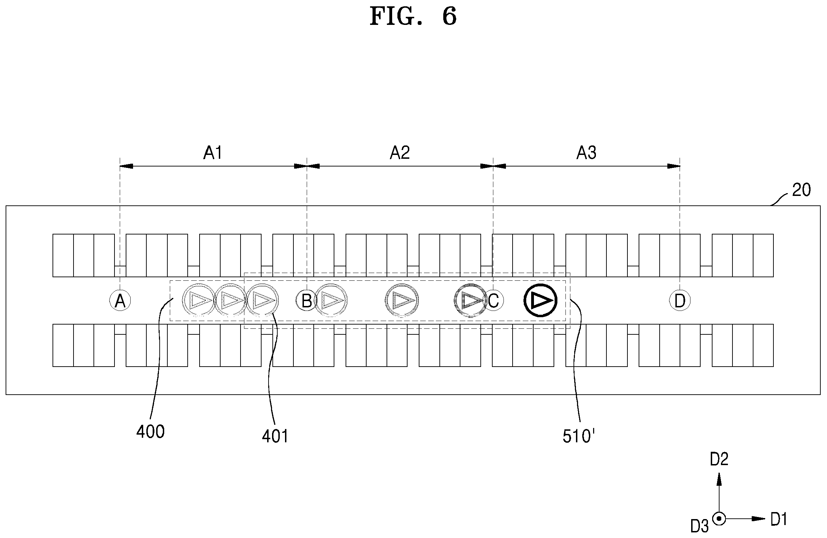

FIG. 6 is a diagram for explaining a single path display method according to another embodiment of the present disclosure. Descriptions that are the same as those with respect to FIG. 5 are omitted, and differences will be mainly described.

In the embodiment of FIG. 6, assuming that a node 401 is a start node, it is assumed that a node C is recognized as a node that satisfies a preset reference value in the node 401. In other words, in FIG. 6, the node C may be determined to be a first target node Nt. Here, the difference between FIG. 5 and FIG. 6 is that a target node recognized by the start node is not a node (a node B) closest to the start node (a current position) from among node data, but the node C adjacent to the node B.

Thereafter, the control unit 110 may similarly determine a first end node, which is the end node of a first correction UI 510', based on the first target node Nt. In this case, the first end node may be determined to be the first target node Nt or a node next adjacent to the first target node Nt in the first direction D1. For example, in FIG. 6, because the first target node Nt is recognized as the node C at the display position 401 of the moving object, the first end node may be the node C or a node D. When the first end node is the node C, the first correction UI 510' may be displayed in first and second sections A1 and A2, and when the first end node is the node D, the first correction UI 510' may be displayed in the first and second sections A1 and A2 and a third section A3. FIG. 6 shows an embodiment in which a first end node Nf is the node D that is a next node adjacent to the first target node Nt in the first direction D1.

As described above, according to the screen display method and device according to embodiments of the present disclosure, a target node may be flexibly and accurately determined according to positioning data of a moving object obtained in real time. Accordingly, a navigation service accompanied by more smooth and effective visual effects may be provided to users.

With reference to FIGS. 5 and 6 described above, a screen display method when the control unit 110 determines that the moving object does not rotate when determining the subsequent display operation will be described below.

When the control unit 110 determines that the moving object does not rotate at the first end node, a second correction UI moving from a second start node extending in the first direction D1 to a second end node may be generated and displayed in the subsequent display operation.

Specifically, the control unit 110 replaces the aforementioned first end node with the second start node and determines a second target node adjacent to the first end node as the second end node. Thereafter, a second correction UI displayed at a uniform speed from the second start node to the second end node may be generated and displayed.

For example, referring to FIG. 5 as an example, in an embodiment in which the start node is a node 401, the first target node Nt is a node B, and the first end node Nf is a node C, the control unit 110 determines whether the moving object rotates at the node C, which is the first end node, and determines that the moving object does not rotate. In this case, the node C, which is the first end node, may be replaced with the second start node of the subsequent display operation, and the node D (not shown) adjacent to the node C in the movement direction of the moving object in the first direction D1 may be determined to be the second end node. In this case, a subsequent target node may be determined while it is determined whether the moving object rotates at the first end node C. In other words, in this case, the node D is recognized as the second target node and determined to be the second end node.

Thereafter, the control unit 110 may generate and display a second correction UI (not shown) displayed at a uniform speed from the second start node to the second end node.

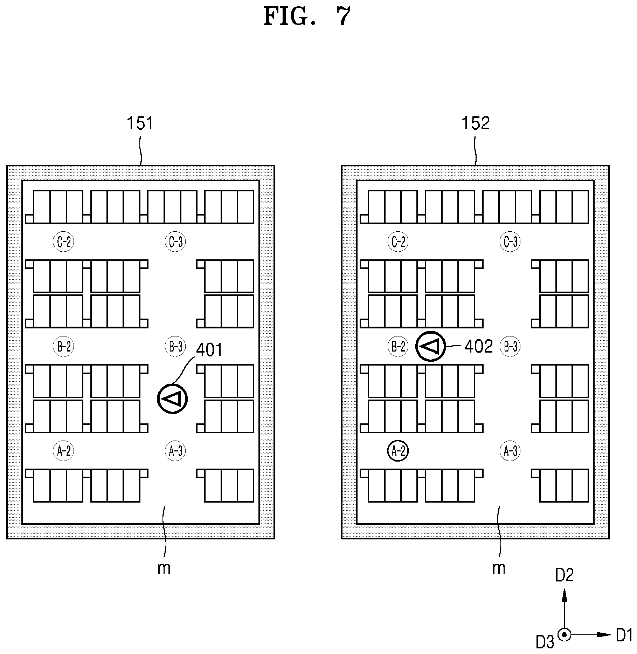

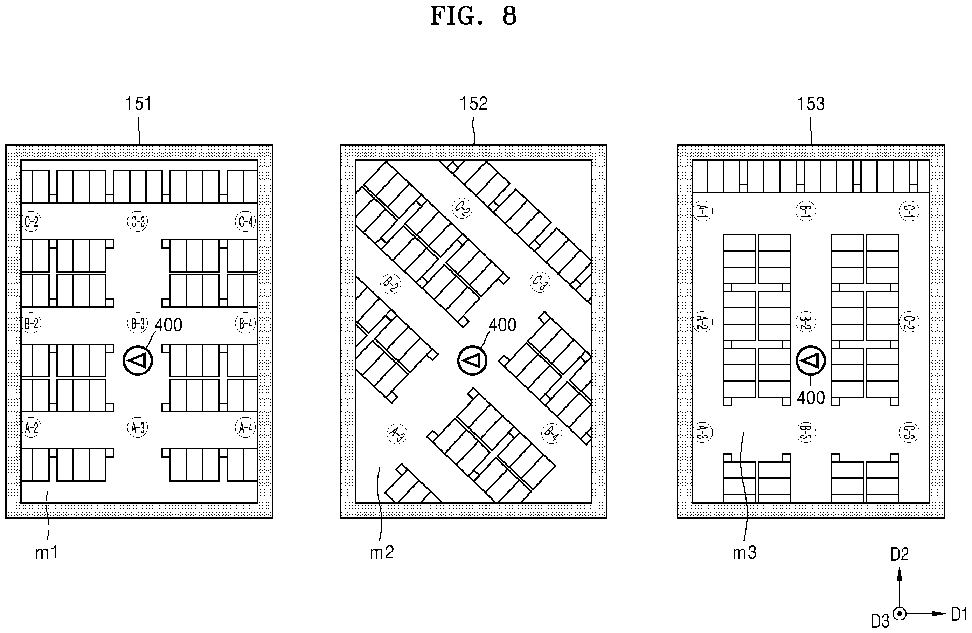

Hereinafter, a display mode of a screen display method according to an embodiment of the present disclosure will be described with reference to FIGS. 7 and 8. FIG. 7 is a diagram for explaining a display mode according to an embodiment of the present disclosure, and FIG. 8 is a diagram for explaining a display mode according to another embodiment of the present disclosure.

The screen display device 100 may receive a selection signal for a display mode through the communication unit 120 or an input/output module (not shown). In this case, the selection signal may be input by a user's manipulation, or may be executed by an algorithm preset in the control unit 110 or the memory 130. The selection signal may be received by the screen display device 100 in various ways.. The display mode may include an object switching mode as shown in FIG. 7 and a background switching mode as shown in FIG. 8.

First, referring to FIG. 7, display screens 151 and 152 at different points in time, which are displayed through the display unit 150, are shown. The display screen 152 on the right of FIG. 7 is a screen at a point in time after the display screen 151 on the left of FIG. 7. The display mode shown in FIG. 7 is an object switching mode in which an indoor space image m is fixed and a moving object UI moves from a position 401 to a position 402. Referring to the two display screens 151 and 152, the movement of a moving object rotating in a first direction D1 at a node B-3 is shown. In this case, the indoor space image m is fixed, and the moving object UI moves from the position 401 to the position 402.

Referring to FIG. 8, display screens 151, 152, and 153 at different points in time are shown. The display screens 151, 152, and 153 are display screens according to the sequential flow of time from the left. The display mode shown in FIG. 8 is a background switching mode in which a moving object UI 400 is fixed and an indoor space image m1, m2, and m3 moves. Referring to the three display screens 151, 152, and 153, the movement of a moving object rotating in a direction parallel to a first direction D1 at a node B-3 is shown. In this case, the moving object UI 400 is fixed, and the indoor space image is switched from m1 to m2, and then from m2 to m3. In this case, the movement of the indoor space image may be gradually and continuously performed according to an indoor space image (map data) stored in the memory 130.

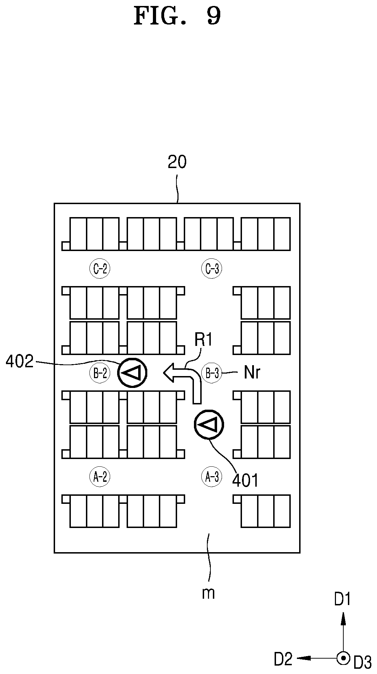

Hereinafter, embodiments in which the control unit 110 determines that a moving object rotates when determining the subsequent display operation described above will be described with reference to FIGS. 9 to 11.

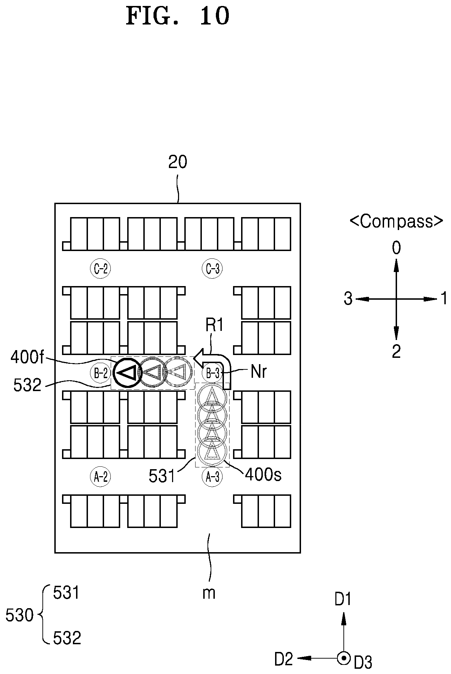

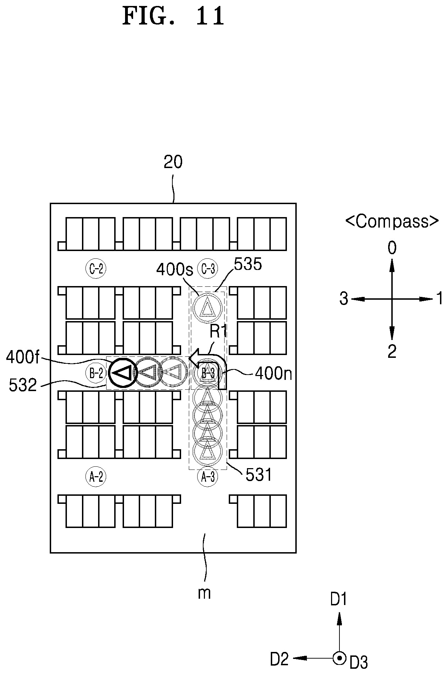

FIG. 9 is a diagram for explaining a display method during general rotation. FIG. 9 shows a display example when there is no animation effect through a correction UI for rotation. In this case, the control unit 110 determines that a moving object UI rotates in a rotation section R1 formed at a node B-3, and accordingly, the moving object UI is displayed as a moving object UI 401 in a section between a node A-3 and a node B-3 at a first point in time and is displayed as a moving object UI 402 in a section between a node B-3 and a node B-2 at a second point in time after rotation. As shown in FIG. 9, in the rotational movement of a moving object, it is difficult to determine a continuous rotational movement from a start point to an end point because the movement is determined only by a moving object UI displayed separately without correction animation. Accordingly, with reference to FIGS. 10 and 11 to be described below, embodiments of a screen display method and device through correction animation according to the present disclosure will be described.

First, the embodiment of FIG. 10 will be described. FIG. 10 is a diagram for explaining a screen display method during rotation according to an embodiment of the present disclosure.

When the control unit 110 determines that a moving object rotates at a first end node (i.e., a node B-3 in FIGS. 10 and 11) (hereinafter, the first end node may also be referred to as a rotation node Nr), the subsequent display operation may be an operation of generating and displaying a third correction UI 530 including a correction UI moving in a second direction D2 different from the first direction D1.

In this case, when the control unit 110 generates the third correction UI 530, the control unit 110 may first generate a third-first correction UI 531 moving in the first direction D1 from a first start node 400s to a first end node B-3. Thereafter, the control unit 110 may generate a third-second correction UI 532 moving in the second direction toward a third end node determined based on a third target node (i.e., a node B-2) adjacent to the first end node B-3 in the second direction D2. In this case, the third end node may be the node B-2 or a node B-1 (not shown) adjacent to the left side of the node B-2. According to an embodiment, when the moving object stops before the node B-2 while moving in the second direction D2, the third end node may be a stopped node (a node 400f in FIG. 10).

In this case, in generating the third-first correction UI 531, the control unit 110 may comparatively determine a precedence relationship between the first end node and a subsequent node corresponding to subsequent positioning data obtained at a second point in time after the first point in time. As shown in FIG. 10, as a result of the comparatively determining, when it is determined that the subsequent node is located before the first end node Nr in the first direction D1, the control unit 110 may control one of a moving object UI 400 and an indoor space image m to rotate, according to a display mode selected according to a selection signal based on the first end node Nr, between an operation of generating the third-first correction UI 531 and an operation of generating the third-second correction UI 532.

Specifically, when generating the third-first correction UI 531, the control unit 110 may stop the aforementioned first correction UI displayed in a section between a node A-3 and a node B-3. Thereafter, when the display speed of the first correction UI is referred to as a first speed, a fourth correction UI that proceeds to the first end node B-3 (Nr) at a second speed different from the first speed may be generated. FIG. 10 illustrates an example in which the third-first correction UI 531 includes both the first correction UI and the fourth correction UI. Thereafter, the control unit 110 may control the moving object to rotate according to a display mode selected based on the first end node B-3 (Nr).

In this case, rotation according to the selected display mode may be performed based on direction data shown in the upper right corner of FIG. 10.

The control unit 110 may calculate first direction data about the amount of rotation (i.e., a rotation amount) of a moving object by using the first sensing data.

The 'first direction data' may be calculated by performing a fusion operation on a first-first coordinate value of first-first sensing data and a first-second coordinate value of first-second sensing data. The first-first sensing data and the first-second sensing data are included in the first sensing data obtained by the sensor unit 140. The first-first sensing data is a sensing value obtained by the accelerometer 141, and the first-second sensing data is a sensing value obtained by the gyroscope 142. That is, a rotation amount and rotation direction of the moving object may be calculated using the sensing values of the accelerometer 141 and the gyroscope 142, which will be described in detail below.

The accelerometer 141 and the gyroscope 142 are three-axis sensors, and it is assumed that the first-first coordinate value and the first-second coordinate value are (acc(x), acc(y), acc(z)) and (gyr(x), gyr(y), gyr(z)), respectively. The 'first direction data' includes the following first change amount, second change amount, and third change amount. When a radian change amount per second is a first change amount $\Delta s1$, a degree change amount per second is a second change amount $\Delta s2$, and an actual degree change amount is a third change amount $\Delta s3$, the values of the first change amount $\Delta s1$, the second change amount $\Delta s2$, and the third change amount $\Delta s3$ are respectively obtained by Equations 1, 2, and 3 below.

[Equation 1]

$$\Delta s1 = \frac{acc(x) \times gyr(x) + acc(y) \times gyr(y) + acc(z) \times gyr(z)}{\sqrt{acc(x)^2 + acc(y)^2 + acc(z)^2}}$$

[Equation 2]

$$\Delta s2 = \frac{\Delta s1 \times 180}{\pi}$$

[Equation 3]

$$\Delta s3 = \frac{\Delta s2 \times (\text{TIME DIFFERENCE})}{1000}$$

In Equation 3, 1000 is a variable determined based on the value of time, and means that the unit of 1000 is seconds (sec). That is, referring to Equation 3, the third change amount $\Delta s3$, which is an actual change amount, may be obtained by integrating the second change amount $\Delta s2$. For example, because the second change amount $\Delta s2$ is not limited in range according to the rotation amount and the third change amount $\Delta s3$ is the actual change amount at a point in time, a degree value obtained by accumulating the third change amount $\Delta s3$ may have a value within the range of 0 degrees to 360 degrees. For example, when the moving object rotates and the degree value obtained by accumulating the third change amount $\Delta s3$ is a value greater than 360 degrees, the degree value may be changed to 0 degrees again, and when the degree value obtained by accumulating the third change amount $\Delta s3$ is a value less than 0 degrees, the degree value may be changed to 360 degrees again.

Thereafter, the control unit 110 may determine the rotation information by associating the above-described first direction data to the node data to determine second direction data related to the rotation direction. In this case, as an example of the second direction data, descriptions will be made with reference to the Compass variable shown in the upper right corner of FIG. 10.

In FIG. 10, the Compass variable is set, for example, to have four values of East, West, South, and North (values of 1, 2, and 3 in a clockwise direction from 0) by considering the node data on the movement path that is a traveling path of the moving object. For example, assuming that 0<a<90 (degrees), the control unit 110 may determine the second direction data as 0 when the degree value obtained by accumulating the third change amount $\Delta s3$ is greater than or equal to (360-a) degrees and less than or equal to (360+a) degrees, determine the second direction data as 1 when the degree value obtained by accumulating the third change amount $\Delta s3$ is greater than or equal to (90-a) degrees and less than or equal to (90+a) degrees, determine the second direction data as 2 when the degree value obtained by accumulating the third change amount $\Delta s3$ is greater than or equal to (180-a) degrees and less than or equal to (180+a) degrees, and determine the second direction data as 3 when the degree value obtained by accumulating the third change amount $\Delta s3$ is greater than or equal to (270-a) degrees and less than or equal to (270+a) degrees.

In determining the rotation information, the types of the first direction data and the second direction data and the method of determining the first direction data and the second direction data are not limited to those described above.

FIG. 11 is a diagram for explaining a screen display method during rotation according to another embodiment of the present disclosure. FIG. 11 is an embodiment of a case where it is determined that the subsequent node precedes the first end node B-3 (Nr) in the first direction D1 based on a result of the comparatively determining.

In this case, in generating the third-first correction UI 531, the control unit 110 may generate a fifth correction UI 535 for refreshing the position of a moving object to the first end node B-3 (Nr). Then, one of the moving object UI 400 and the indoor space image m may be rotated according to a display mode selected based on the first end node B-3 (Nr). In this case, the third-second correction UI 532 moving in the second direction D2 is generated and displayed after the fifth correction UI 535 is generated.

Even in the rotation in the embodiment of FIG. 11, the same principle as the rotation based on the direction data described above with reference to FIG. 10 may be applied.

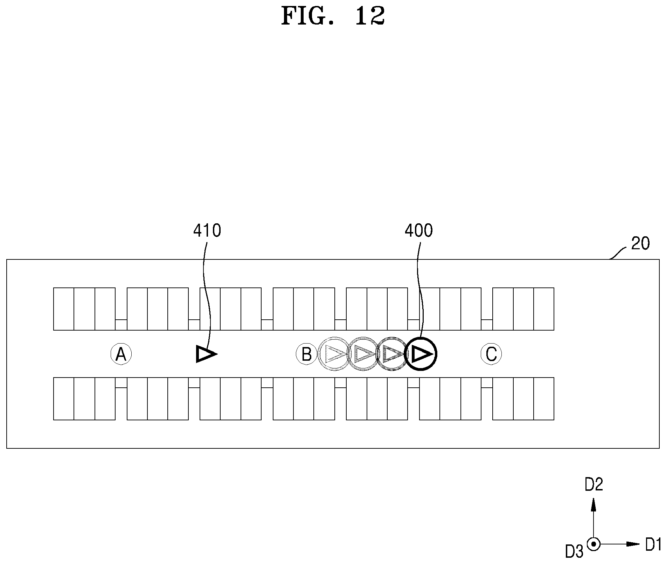

FIG. 12 is a diagram for explaining a method of generating a correction UI according to whether to stop displaying the moving object UI, according to an embodiment of the present disclosure.

In at least one of the first display operations and the subsequent display operation, described above, the control unit 110 may perform a stop correction operation by determining a display stop condition. The stop correction operation may include an operation of stopping the display of the moving object UI 400 for a certain period of time or an operation of slowing down the display speed of the moving object UI 400. For example, the distance between the position of the moving object UI 400 displayed at a point in time and the position of the first UI object 410 corresponding to positioning data obtained at the point in time may be calculated. As a result of the calculation, when the calculated distance differs by a certain distance or more, that is, when the moving object UI 400 is ahead of the first UI object 410 by a predetermined distance or more, the stop correction operation may be performed. For example, the predetermined distance may be the length of one section defined by adjacent boundary nodes, but is not limited thereto.

In contrast, when the moving object UI 400 is displayed behind the first UI object 410, the first correction UI described with reference to FIGS. 5 and 6 may be generated and displayed instead of performing the stop correction operation.

According to an embodiment, in determining whether to stop displaying the moving object UI 400, the control unit 110 may determine whether to stop displaying the moving object UI 400, based on the first sensing data that is a value sensed by the sensor unit 140, particularly the accelerometer 141 or the gyroscope 142. For example, when the value of fusion acceleration calculated according to a certain criterion by using a value sensed by the accelerometer 141 differs by a certain value or more between one point in time and another point in time after the one point in time, it may be determined that the moving object UI 400 moves. In addition, when the value of the fusion acceleration differs by a certain value or less, it may be determined that the moving object UI 400 stops. The value of the fusion acceleration may be represented by Equation 4 below when coordinate values as values sensed the accelerometer 141 are (acc(x), acc(y), and acc(z)).

[Equation 4]

$$acc(x)^2 + acc(y)^2 + acc(z)^2$$

A criterion of a certain value for determining whether to stop may be set differently according to a time period in which the control unit 110 obtains the fusion acceleration data.

The screen display device 100 according to an embodiment of the present disclosure may perform a recommended path display correction operation to be described below.

In performing at least one of the first display operations and the subsequent display operation, the control unit 110 may determine whether the subsequent positioning data deviates from recommended path data by a certain distance or more. When it is determined that the subsequent positioning data deviates from the recommended path data within the certain distance, the display on the recommended path may be maintained without correcting the position of the moving object with the obtained positioning data. Alternatively, when it is determined that the subsequent positioning data deviates from the recommended path data by the certain distance or more, the position of the moving object may be refreshed with the obtained positioning data, and a new recommended path may be generated and displayed using the refreshed position as a starting point.

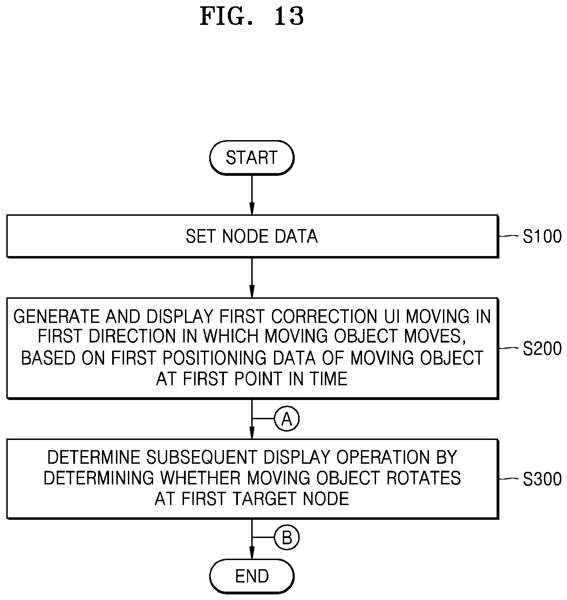

FIG. 13 is a flowchart illustrating a screen display method according to an embodiment of the present disclosure. The screen display method may include operations to be described below, and will be described with reference to the drawings described above.

Node data including information about a position of a positioning sensor is set, according to a preset rule, on a movement path on which a moving object is movable with respect to an indoor space (operation S100).

Thereafter, a first display operation of generating and displaying a first correction UI moving in a first direction in which the moving object moves is performed based on first positioning data of the moving object at a first point in time, the first correction UI being displayed with a speed corrected in comparison with an actual speed of the moving object from a first start node to a first end node (operation S200).

The first display operation may include determining the first start node based on the first positioning data, determining a first target node at which the first positioning data obtained using the node data satisfies a preset reference value, determining the first end node based on the first target node, and generating and displaying the first correction UI displayed at a uniform speed from the first start node to the first end node.

Thereafter, a subsequent display operation is determined by determining whether the moving object rotates at the first target node (operation S300). Although it is illustrated in FIG. 13 that operation S300 is performed after operation S200, operation S200 and operation S300 may be performed in parallel according to embodiments. In other words, regardless of whether the first positioning data satisfies the preset reference value, whether the moving object rotates may be determined based on the node data and the first positioning data. In this case, the first target node may be a rotation node rather than a node that satisfies a reference value.

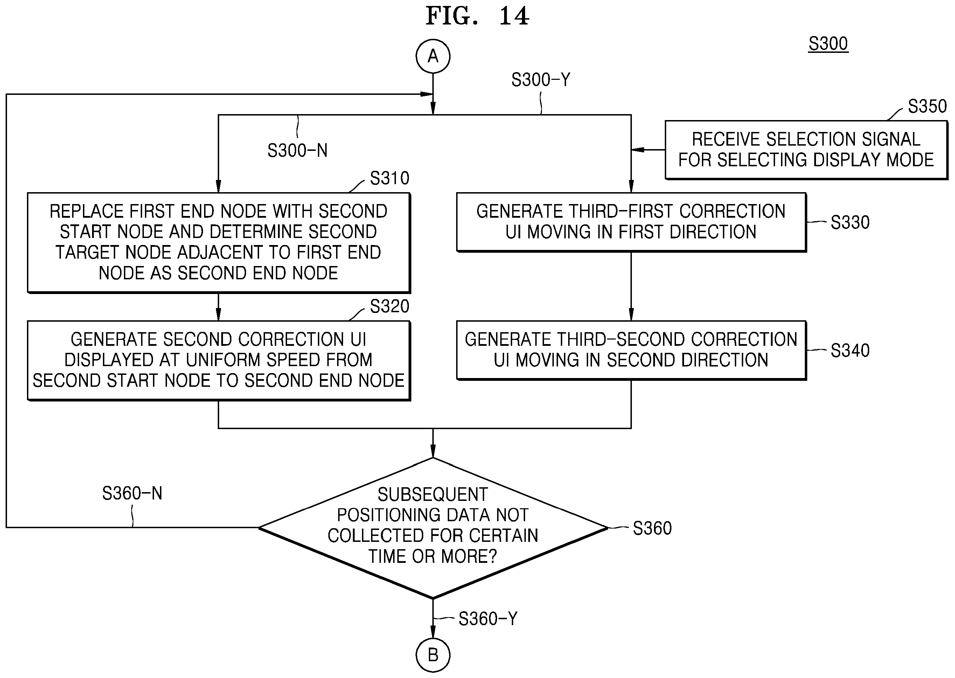

FIG. 14 is a flowchart illustrating, in more detail, operation S300, which is a partial operation of the screen display method according to an embodiment of the present disclosure. The determining of the subsequent display operation (operation S300) may include operations to be described below.

When it is determined that the moving object does not rotate in the determining of the subsequent display operation (operation S300-N), the subsequent display operation may include a second display operation of generating and displaying a second correction UI moving from a second start node extending in the first direction to a second end node. In this case, in the second display operation, the first end node is replaced with the second start node, and a second target node adjacent to the first end node is determined to be the second end node (operation S310). Thereafter, a second correction UI displayed at a uniform speed from the second start node to the second end node is generated and displayed (operation S320). A second correction animation may be generated according to the same principle as the first correction animation.

In contrast, when it is determined that the moving object rotates in the determining of the subsequent display operation (operation S300-Y), the subsequent display operation may include a third display operation of generating and displaying a third correction UI moving in a second direction different from the first direction. In this case, in the third display operation, a third-first correction UI moving in the first direction from the first start node to the first end node is generated (operation S330). Thereafter, a third-second correction UI moving in the second direction is generated by setting a third target node adjacent to the first end node in the second direction as a third end node (operation S340).

The screen display method according to an embodiment of the present disclosure may further include receiving a selection signal for a display mode (operation S350). The display mode may include an object switching mode in which an indoor space image is fixed and a moving object UI moves, and a background switching mode in which the moving object UI is fixed and the indoor space image moves.

The generating of the third-first correction UI (operation S330) may include the following operations.

The generating of the third-first correction UI (operation S330) may include comparatively determining a precedence relationship between the first end node and a subsequent node corresponding to subsequent positioning data obtained at a second point in time after the first point in time. As a result of the comparatively determining, when it is determined that the subsequent node is located before the first end node in the first direction, the third display operation may include, between the generating of the third-first correction UI (operation S330) and the generating of the third-second correction UI (operation S340), rotating one of the moving object UI and the indoor space image according to the display mode selected according to the selection signal based on the first end node.

According to another embodiment, as a result of the comparatively determining, when it is determined that the subsequent node precedes the first end node in the first direction, the generating of the third-first correction UI (operation S330) may further include generating a fifth correction UI 535 for refreshing a position of the moving object to the first end node, and rotating one of the moving object UI and the indoor space image according to the display mode selected according to the selection signal based on the first end node.

After operations S310, S320, S330, and S340 described above, it is determined whether subsequent positioning data has not been collected for a certain time or more (S360). When it is determined that subsequent positioning data has not been collected for the certain time or more (operation S360-Y), operation S300 is terminated, and when it is determined that subsequent positioning data has been collected within the certain time, the aforementioned operations may be repeated again.

As described above, according to embodiments of the present disclosure, a screen display method and device with improved real-time accuracy may be provided by using a positioning algorithm using node data in a movable path.

In addition, by generating a correction UI (correction animation) for correcting errors in various cases, which occur when performing an indoor positioning algorithm, an error between the actual position of a moving object and the display position thereof may be reduced, and smoother visual effects and high-quality navigation services may be provided to users.

Embodiments according to the present disclosure described above may be implemented in the form of a computer program that can be executed on a computer through various components, and such a computer program may be recorded on a computer-readable medium. In this case, the computer-readable medium may store a program executable by a computer. Examples of the computer-readable medium may include magnetic media, such as a hard disk, a floppy disk, and a magnetic tape, optical recording media, such as compact disk-read only memory (CD-ROM) and digital versatile disk (DVD), magneto-optical media, such as a floptical disk, and hardware devices configured to store program instructions, such as ROM, random access memory (RAM), and a flash memory.

The computer program may be a program specially designed and configured for the present disclosure, or program known and usable to those skilled in the art of computer software. Examples of computer programs may include machine language code, such as code generated by a compiler, as well as high-level language code, that is executable by a computer using an interpreter, etc.

## Claims

1. A screen display method according to indoor positioning, comprising:

   setting (S100) node data including information about a position of a positioning sensor installed in an indoor space, according to a preset rule, on a movement path on which a moving object is movable with respect to the indoor space, wherein the position of the node indicates the position of the positioning sensor;
   obtaining positioning data of the moving object by using at least one of the node data, first sensing data obtained through a sensor unit (140) of the moving object, and second sensing data obtained through the positioning sensor (200), wherein the sensor unit of the moving object includes an accelerometer and a gyroscope;
   generating and displaying (S200) a first correction user interface, UI, moving in a first direction in which the moving object moves, based on first positioning data of the moving object at a first point in time, the first correction UI being displayed, at a display unit (150); (150), with a speed corrected in comparison with an actual speed of the moving object from a first start node to a first end node; and
   determining (S300) a subsequent display operation by determining whether the moving object rotates at the first end node by using rotation information included in the first sensing data, said rotation information including information about a roll angle, a pitch angle and a yaw angle of the moving object and speed information,
   wherein the generating and displaying (S200) of the first correction UI includes:

   determining a first start node based on the first positioning data;
determining a first target node at which the first positioning data obtained using the node data satisfies a preset reference value;
determining a first end node based on the first target node; and
generating and displaying the first correction UI displayed at a uniform speed from the first start node to the first end node.

2. The screen display method of claim 1, wherein, when it is determined that the moving object does not rotate in the determining of the subsequent display operation (S300-N), the subsequent display operation includes generating and displaying a second correction UI moving from a second start node extending in the first direction to a second end node, wherein the generating and displaying of the second correction UI includes:

replacing (S310) the first end node with the second start node and determining a second target node adjacent to the first end node as the second end node; and
generating and displaying (S320) the second correction UI displayed at a uniform speed from the second start node to the second end node.

3. The screen display method of claim 1, wherein, when it is determined that the moving object rotates in the determining of the subsequent display operation (S300-Y), the subsequent display operation includes generating and displaying a third correction UI moving in a second direction different from the first direction, wherein the generating and displaying of the third correction UI includes:

generating (S330) a third-first correction UI moving in the first direction from the first start node to the first end node; and
generating (S340) a third-second correction UI moving in the second direction toward a third end node determined based on a third target node adjacent to the first end node in the second direction.

4. The screen display method of claim 3, further comprising receiving (S350) a selection signal for a display mode, wherein the display mode includes an object switching mode in which an indoor space image is fixed and a moving object UI moves, and a background switching mode in which the moving object UI is fixed and the indoor space image moves.

5. The screen display method of claim 4, wherein the generating (S330) of the third-first correction UI includes comparatively determining a precedence relationship between the first end node and a subsequent node corresponding to subsequent positioning data obtained at a second point in time after the first point in time,
wherein, as a result of the comparatively determining, when it is determined that the subsequent node is located before the first end node in the first direction, the generating and displaying of the third correction UI further includes, between the generating of the third-first correction UI and the generating of the third-second correction UI, rotating one of the moving object UI and the indoor space image according to the display mode selected according to the selection signal based on the first end node.

6. The screen display method of claim 4, wherein the generating (S330) of the third-first correction UI includes comparatively determining a precedence relationship between the first end node and a subsequent node corresponding to subsequent positioning data obtained at the second point in time after the first point in time,
wherein, as a result of the comparatively determining, when it is determined that the subsequent node precedes the first end node in the first direction, the generating of the third-first correction UI further includes:

generating a fifth correction UI for refreshing the position of the moving object to the first end node; and
rotating one of the moving object UI and the indoor space image according to the display mode selected according to the selection signal based on the first end node.

7. The screen display method of claim 1, wherein at least one of the generating and displaying (S200) of the first correction UI and the determining (S300) of the subsequent display operation includes:

calculating a distance between a position of a moving object UI displayed based on the first positioning data and a position corresponding to the first positioning data; and
performing a stop correction operation of the moving object UI when the position of the moving object UI precedes the position corresponding to the first positioning data by a certain distance.

8. A screen display device (100) corresponding to a moving object and performing a method according to indoor positioning, comprising

a control unit (110),

a sensor unit (140) of the moving object,
and a display unit (150),
wherein the control unit (110) is configured to:

set node data including information about a position of a positioning sensor installed in an indoor space, according to a preset rule, on a movement path on which the moving object is movable with respect to the indoor space, wherein the position of the node indicates the position of the positioning sensor;

obtain positioning data of the moving object by using at least one of the node data, first sensing data obtained through the sensor unit (140) of the moving object, and second sensing data obtained through the positioning sensor (200), wherein the sensor unit of the moving object includes an accelerometer and a gyroscope;

generate and display a first correction user interface, UI, moving in the first direction in which the moving object moves, based on first positioning data of the moving object at a first point in time, the first correction UI being displayed, at the display unit (150), with a speed corrected in comparison with an actual speed of the moving object from a first start node to a first end node; and

determine a subsequent display operation by determining whether the moving object rotates at the first end node by using rotation information included in the first sensing data, said rotation information including information about a roll angle, a pitch angle and a yaw angle of the moving object and speed information,

wherein, when the control unit (110) generates and displays the first correction UI, the control unit (110) is further configured to:

determine a first start node based on the first positioning data;

determine a first target node at which the first positioning data obtained using the node data satisfies a preset reference value;

determine a first end node based on the first target node; and

generate and display the first correction UI displayed at a uniform speed from the first start node to the first end node.

9. The screen display device (100) of claim 8, wherein, when the control unit (110) determines that the moving object does not rotate when determining the subsequent display operation, the subsequent display operation includes generating and displaying a second correction UI moving from a second start node extending in the first direction to a second end node,
wherein the control unit (110) is further configured to:

replace the first end node with the second start node and determine a second target node adjacent to the first end node as the second end node; and

generate the second correction UI displayed at a uniform speed from the second start node to the second end node.

10. The screen display device (100) of claim 8, wherein, when the control unit (110) determines that the moving object rotates when determining the subsequent display operation, the subsequent display operation includes generating and displaying a third correction UI moving in a second direction different from the first direction,
wherein, when the control unit (110) generates the third correction UI, the control unit (110) is further configured to:

generate a third-first correction UI moving in the first direction from the first start node to the first end node; and

generate a third-second correction UI moving in the second direction toward a third end node determined based on a third target node adjacent to the first end node in the second direction.

11. The screen display device (100) of claim 10, wherein the screen display device (100) receives a selection signal for a display mode,
wherein the display mode includes an object switching mode in which an indoor space image is fixed and a moving object UI moves, and a background switching mode in which the moving object UI is fixed and the indoor space image moves.

12. The screen display device (100) of claim 11, wherein, when the control unit (110) generates the third-first correction UI, the control unit (110) is further configured to comparatively determine a precedence relationship between the first end node and a subsequent node corresponding to subsequent positioning data obtained at a second point in time after the first point in time,
wherein, as a result of the comparatively determining, when it is determined that the subsequent node is located before the first end node in the first direction, the control unit (110) is further configured to perform, after generating the third-first correction UI and before generating the third-second correction UI, an operation of rotating one of the moving object UI and the indoor space image according to the display mode selected according to the selection signal based on the first end node.

13. The screen display device (100) of claim 11, wherein, when the control unit (110) generates the third-first correction UI, the control unit (110) is further configured to comparatively determine a precedence relationship between the first end node and a subsequent node corresponding to the subsequent positioning data obtained at the second point in time after the first point in time,

wherein, as a result of the comparatively determining, when it is determined that the subsequent node precedes the first end node in the first direction, the control unit (110) is further configured to:

generate a fifth correction UI for refreshing the position of the moving object to the first end node; and
perform an operation of rotating one of the moving object UI and the indoor space image according to the display mode selected according to the selection signal based on the first end node.

14. The screen display device (100) of claim 8, wherein, when the control unit (110) performs at least one of the operations of displaying the first correction UI and the subsequent display operation, the control unit (110) is further configured to:

calculate a distance between a position of a moving object UI displayed based on the first positioning data and a position corresponding to the first positioning data; and
perform a stop correction operation of the moving object UI when the position of the moving object UI precedes the position corresponding to the first positioning data by a certain distance.

**Patentansprüche**

1. Verfahren zur Anzeige eines Bildschirms in Abhängigkeit von einer Innenraumpositionierung, umfassend:

Festlegen (S100) von Knotendaten einschließlich Informationen über eine Position eines in einem Innenraum installierten Positionierungssensors gemäß einer voreingestellten Regel auf einem Bewegungspfad, auf dem ein sich bewegendes Objekt in Bezug auf den Innenraum bewegbar ist, wobei die Position des Knotens die Position des Positionierungssensors angibt;
Erhalten von Positionierungsdaten des sich bewegenden Objekts durch Verwenden mindestens eines von den Knotendaten, ersten Erfassungsdaten, die durch eine Sensoreinheit (140) des sich bewegenden Objekts erhalten wurden, und zweiten Erfassungsdaten, die durch den Positionierungssensor (200) erhalten wurden, wobei die Sensoreinheit des sich bewegenden Objekts einen Beschleunigungsmesser und ein Gyroskop umfasst;
Erzeugen und Anzeigen (S200) einer ersten Korrektur-Benutzeroberfläche, UI, die sich in eine erste Richtung bewegt, in der sich das sich bewegende Objekt bewegt, basierend auf ersten Positionierungsdaten des sich bewegenden Objekts zu einem ersten Zeitpunkt, wobei die erste Korrektur-UI auf einer Anzeigeeinheit (150) mit einer Geschwindigkeit angezeigt wird, die im Vergleich zu einer tatsächlichen Geschwindigkeit des sich bewegenden Objekts von einem ersten Startknoten zu einem ersten Endknoten korrigiert wurde; und
Bestimmen (S300) eines nachfolgenden Anzeigevorgangs durch Bestimmen, ob sich das sich bewegende Objekt am ersten Endknoten dreht, unter Verwendung von in den ersten Erfassungsdaten enthaltenen Drehinformationen, wobei die Drehinformationen Informationen über einen Rollwinkel, einen Nickwinkel und einen Gierwinkel des sich bewegenden Objekts sowie Geschwindigkeitsinformationen umfassen,
wobei das Erzeugen und Anzeigen (S200) der ersten Korrektur-UI Folgendes umfasst:

Bestimmen eines ersten Startknotens basierend auf den ersten Positionierungsdaten;
Bestimmen eines ersten Zielknotens, an dem die unter Verwendung der Knotendaten erhaltenen ersten Positionierungsdaten einen voreingestellten Referenzwert erfüllen;
Bestimmen eines ersten Endknotens basierend auf dem ersten Zielknoten; und
Erzeugen und Anzeigen der ersten Korrektur-UI, die mit einer gleichmäßigen Geschwindigkeit vom ersten Startknoten bis zum ersten Endknoten angezeigt wird.

2. Verfahren zur Anzeige eines Bildschirms nach Anspruch 1, wobei, wenn bei der Bestimmung des nachfolgenden Anzeigevorgangs (S300-N) bestimmt wird, dass sich das sich bewegende Objekt nicht dreht, der nachfolgende Anzeigevorgang ein Erzeugen und Anzeigen einer zweiten Korrektur-UI umfasst, die sich von einem zweiten Startknoten, der sich in die erste Richtung erstreckt, zu einem zweiten Endknoten bewegt,
wobei das Erzeugen und Anzeigen der zweiten Korrektur-UI Folgendes umfasst:

Ersetzen (S310) des ersten Endknotens durch den zweiten Startknoten und Bestimmen eines zweiten Zielknotens, der an den ersten Endknoten angrenzt, als den zweiten Endknoten; und Erzeugen und Anzeigen (S320) der zweiten Korrektur-UI, die mit einer gleichmäßigen Geschwindigkeit vom zweiten Startknoten zum zweiten Endknoten angezeigt wird.

3. Verfahren zur Anzeige eines Bildschirms nach Anspruch 1, wobei, wenn bei der Bestimmung des nachfolgenden Anzeigevorgangs (S300-Y) bestimmt wird, dass sich das sich bewegende Objekt dreht, der nachfolgende Anzeigevorgang ein Erzeugen und Anzeigen einer dritten Korrektur-UI umfasst, die sich in eine zweite Richtung bewegt, die von der ersten Richtung verschieden ist, wobei das Erzeugen und Anzeigen der dritten Korrektur-UI Folgendes umfasst:

   Erzeugen (S330) einer dritten-ersten Korrektur-UI, die sich in der ersten Richtung vom ersten Startknoten zum ersten Endknoten bewegt; und Erzeugen (S340) einer dritten-zweiten Korrektur-UI, die sich in die zweite Richtung in Richtung eines dritten Endknotens bewegt, der basierend auf einem dritten Zielknoten bestimmt wird, der in der zweiten Richtung an den ersten Endknoten angrenzt.

4. Verfahren zur Anzeige eines Bildschirms nach Anspruch 3, ferner umfassend ein Empfangen (S350) eines Auswahlsignals für einen Anzeigemodus, wobei der Anzeigemodus einen Objektumschaltmodus, in dem ein Innenraumbild fixiert ist und sich eine UI eines sich bewegenden Objekts bewegt, und einen Hintergrundumschaltmodus umfasst, in dem die UI des sich bewegenden Objekts fixiert ist und sich das Innenraumbild bewegt.

5. Verfahren zur Anzeige eines Bildschirms nach Anspruch 4, wobei das Erzeugen (S330) der dritten-ersten Korrektur-UI ein vergleichendes Bestimmen einer Vorrangbeziehung zwischen dem ersten Endknoten und einem nachfolgenden Knoten umfasst, der nachfolgenden Positionierungsdaten entspricht, die zu einem zweiten Zeitpunkt nach dem ersten Zeitpunkt erhalten wurden, wobei als ein Ergebnis der vergleichenden Bestimmung, wenn bestimmt wird, dass der nachfolgende Knoten vor dem ersten Endknoten in der ersten Richtung angeordnet ist, das Erzeugen und Anzeigen der dritten Korrektur-UI ferner zwischen dem Erzeugen der dritten-ersten Korrektur-UI und dem Erzeugen der dritten-zweiten Korrektur-UI ein Drehen entweder der UI des sich bewegenden Objekts oder des Innenraumbilds gemäß dem Anzeigemodus umfasst, der gemäß dem Auswahlsignal basierend auf dem ersten Endknoten ausgewählt wurde.

6. Verfahren zur Anzeige eines Bildschirms nach Anspruch 4, wobei das Erzeugen (S330) der dritten-ersten Korrektur-UI ein vergleichendes Bestimmen einer Vorrangbeziehung zwischen dem ersten Endknoten und einem nachfolgenden Knoten umfasst, der nachfolgenden Positionierungsdaten entspricht, die zu einem zweiten Zeitpunkt nach dem ersten Zeitpunkt erhalten wurden, wobei als ein Ergebnis der vergleichenden Bestimmung, wenn bestimmt wird, dass der nachfolgende Knoten dem ersten Endknoten in der ersten Richtung vorausgeht, das Erzeugen der dritten-ersten Korrektur-UI ferner umfasst:

   Erzeugen einer fünften Korrektur-UI zum Aktualisieren der Position des sich bewegenden Objekts zum ersten Endknoten; und Drehen entweder der UI des sich bewegenden Objekts oder des Innenraumbilds gemäß dem Anzeigemodus, der gemäß dem Auswahlsignal basierend auf dem ersten Endknoten ausgewählt wurde.

7. Verfahren zur Anzeige eines Bildschirms nach Anspruch 1, wobei das Erzeugen und Anzeigen (S200) der ersten Korrektur-UI und/oder das Bestimmen (S300) des nachfolgenden Anzeigevorgangs Folgendes umfasst:

   Berechnen einer Distanz zwischen einer Position einer UI eines sich bewegenden Objekts, die basierend auf den ersten Positionierungsdaten angezeigt wird, und einer Position, die den ersten Positionierungsdaten entspricht; und Durchführen eines Stoppkorrekturvorgangs der UI des sich bewegenden Objekts, wenn die Position der UI des sich bewegenden Objekts der den ersten Positionierungsdaten entsprechenden Position um eine bestimmte Distanz vorausgeht.

8. Vorrichtung zur Anzeige eines Bildschirms (100) entsprechend einem sich bewegenden Objekt, die ein Verfahren in Abhängigkeit einer Innenraumpositionierung durchführt, umfassend:

   eine Steuereinheit (110), eine Sensoreinheit (140) des sich bewegenden Objekts, und eine Anzeigeeinheit (150), wobei die Steuereinheit (110) eingerichtet ist zum:

   Festlegen von Knotendaten einschließlich Informationen über eine Position eines in einem Innenraum installierten Positionierungssensors gemäß einer voreingestellten Regel auf einem Bewegungspfad, auf dem das sich bewegende Objekt in Bezug auf den Innenraum bewegbar ist, wobei die Position des Knotens die Position des Positionierungssensors angibt;

Erhalten von Positionierungsdaten des sich bewegenden Objekts durch Verwenden von mindestens einem von den Knotendaten, ersten Erfassungsdaten, die durch die Sensoreinheit (140) des sich bewegenden Objekts erhalten wurden, und zweiten Erfassungsdaten, die durch den Positionierungssensor (200) erhalten wurden, wobei die Sensoreinheit des sich bewegenden Objekts einen Beschleunigungsmesser und ein Gyroskop umfasst;

Erzeugen und Anzeigen einer ersten Korrektur-Benutzeroberfläche, UI, die sich in die erste Richtung bewegt, in der sich das sich bewegende Objekt bewegt, basierend auf ersten Positionierungsdaten des sich bewegenden Objekts zu einem ersten Zeitpunkt, wobei die erste Korrektur-UI auf der Anzeigeeinheit (150) mit einer Geschwindigkeit angezeigt wird, die im Vergleich zu einer tatsächlichen Geschwindigkeit des sich bewegenden Objekts von einem ersten Startknoten zu einem ersten Endknoten korrigiert wurde; und

Bestimmen eines nachfolgenden Anzeigevorgangs durch Bestimmen, ob sich das sich bewegende Objekt am ersten Endknoten dreht, unter Verwendung von in den ersten Erfassungsdaten enthaltenen Drehinformationen, wobei die Drehinformationen Informationen über einen Rollwinkel, einen Nickwinkel und einen Gierwinkel des sich bewegenden Objekts sowie Geschwindigkeitsinformationen umfassen, wobei, wenn die Steuereinheit (110) die erste Korrektur-UI erzeugt und anzeigt, die Steuereinheit (110) ferner eingerichtet ist zum:

Bestimmen eines ersten Startknotens basierend auf den ersten Positionierungsdaten;

Bestimmen eines ersten Zielknotens, an dem die unter Verwendung der Knotendaten erhaltenen ersten Positionierungsdaten einen voreingestellten Referenzwert erfüllen;

Bestimmen eines ersten Endknotens basierend auf dem ersten Zielknoten; und

Erzeugen und Anzeigen der ersten Korrektur-UI, die mit einer gleichmäßigen Geschwindigkeit vom ersten Startknoten bis zum ersten Endknoten angezeigt wird.

9. Vorrichtung zur Anzeige eines Bildschirms (100) nach Anspruch 8, wobei, wenn die Steuereinheit (110) bei der Bestimmung des nachfolgenden Anzeigevorgangs bestimmt, dass sich das sich bewegende Objekt nicht dreht, der nachfolgende Anzeigevorgang ein Erzeugen und Anzeigen einer zweiten Korrektur-UI umfasst, die sich von einem zweiten Startknoten, der sich in die erste Richtung erstreckt, zu einem zweiten Endknoten bewegt,

wobei die Steuereinheit (110) ferner eingerichtet ist zum:

Ersetzen des ersten Endknotens durch den zweiten Startknoten und Bestimmen eines zweiten Zielknotens, der an den ersten Endknoten angrenzt, als den zweiten Endknoten; und Erzeugen und Anzeigen der zweiten Korrektur-UI, die mit einer gleichmäßigen Geschwindigkeit vom zweiten Startknoten zum zweiten Endknoten angezeigt wird.

10. Vorrichtung zur Anzeige eines Bildschirms (100) nach Anspruch 8, wobei, wenn die Steuereinheit (110) bei der Bestimmung des nachfolgenden Anzeigevorgangs bestimmt, dass sich das sich bewegende Objekt dreht, der nachfolgende Anzeigevorgang ein Erzeugen und Anzeigen einer dritten Korrektur-UI umfasst, die sich in eine zweite Richtung bewegt, die von der ersten Richtung verschieden ist,

wobei, wenn die Steuereinheit (110) die dritte Korrektur-UI erzeugt, die Steuereinheit (110) ferner eingerichtet ist zum:

Erzeugen einer dritten-ersten Korrektur-UI, die sich in der ersten Richtung vom ersten Startknoten zum ersten Endknoten bewegt; und Erzeugen einer dritten-zweiten Korrektur-UI, die sich in die zweite Richtung in Richtung eines dritten Endknotens bewegt, der basierend auf einem dritten Zielknoten bestimmt wird, der in der zweiten Richtung an den ersten Endknoten angrenzt.

11. Vorrichtung zur Anzeige eines Bildschirms (100) nach Anspruch 10, wobei die Vorrichtung zur Anzeige eines Bildschirms (100) ein Auswahlsignal für einen Anzeigemodus empfängt,

wobei der Anzeigemodus einen Objektumschaltmodus, in dem ein Innenraumbild fixiert ist und sich eine UI eines sich bewegenden Objekts bewegt, und einen Hintergrundumschaltmodus umfasst, in dem die UI des sich bewegenden Objekts fixiert ist und sich das Innenraumbild bewegt.

**12.** Vorrichtung zur Anzeige eines Bildschirms (100) nach Anspruch 11, wobei, wenn die Steuereinheit (110) die dritte-erste Korrektur-UI erzeugt, die Steuereinheit (110) ferner dazu eingerichtet ist, eine Vorrangbeziehung zwischen dem ersten Endknoten und einem nachfolgenden Knoten entsprechend nachfolgenden Positionierungsdaten, die zu einem zweiten Zeitpunkt nach dem ersten Zeitpunkt erhalten wurden, vergleichend zu bestimmen,
wobei als ein Ergebnis der vergleichenden Bestimmung, wenn bestimmt wird, dass der nachfolgende Knoten vor dem ersten Endknoten in der ersten Richtung angeordnet ist, die Steuereinheit (110) ferner eingerichtet ist zum Durchführen, nach dem Erzeugen der dritten-ersten Korrektur-UI und vor dem Erzeugen der dritten-zweiten Korrektur-UI, eines Vorgangs zum Drehen der UI des sich bewegenden Objekts oder des Innenraumbilds gemäß dem Anzeigemodus, der gemäß dem Auswahlsignal basierend auf dem ersten Endknoten ausgewählt wurde.

**13.** Vorrichtung zur Anzeige eines Bildschirms (100) nach Anspruch 11, wobei, wenn die Steuereinheit (110) die dritte-erste Korrektur-UI erzeugt, die Steuereinheit (110) ferner dazu eingerichtet ist, eine Vorrangbeziehung zwischen dem ersten Endknoten und einem nachfolgenden Knoten entsprechend den nachfolgenden Positionierungsdaten, die zu dem zweiten Zeitpunkt nach dem ersten Zeitpunkt erhalten wurden, vergleichend zu bestimmen,
wobei als ein Ergebnis der vergleichenden Bestimmung, wenn bestimmt wird, dass der nachfolgende Knoten dem ersten Endknoten in der ersten Richtung vorausgeht, die Steuereinheit (110) ferner eingerichtet ist zum:

Erzeugen einer fünften Korrektur-UI zum Aktualisieren der Position des sich bewegenden Objekts zum ersten Endknoten; und
Durchführung eines Vorgangs zum Drehen entweder der UI des sich bewegenden Objekts oder des Innenraumbilds gemäß dem Anzeigemodus, der gemäß dem Auswahlsignal basierend auf dem ersten Endknoten ausgewählt wurde.

**14.** Vorrichtung zur Anzeige eines Bildschirms (100) nach Anspruch 8, wobei, wenn die Steuereinheit (110) mindestens einen der Vorgänge zum Anzeigen der ersten Korrektur-UI und des nachfolgenden Anzeigevorgangs durchführt, die Steuereinheit (110) ferner eingerichtet ist zum:

Berechnen einer Distanz zwischen einer Position einer UI eines sich bewegenden Objekts, die basierend auf den ersten Positionierungsdaten angezeigt wird, und einer Position, die den ersten Positionierungsdaten entspricht; und
Durchführen eines Stoppkorrekturvorgangs der UI des sich bewegenden Objekts, wenn die Position der UI des sich bewegenden Objekts der den ersten Positionierungsdaten entsprechenden Position um eine bestimmte Distanz vorausgeht.

## Revendications

**1.** Procédé d'affichage d'écran en fonction d'un positionnement intérieur, comprenant:

la définition (S100) de données de nœud comprenant des informations concernant la position d'un capteur de positionnement installé dans un espace intérieur, selon une règle prédéfinie, sur un trajet de déplacement sur lequel un objet mobile peut se déplacer par rapport à l'espace intérieur, la position du nœud indiquant la position du capteur de positionnement;
l'obtention de données de positionnement de l'objet mobile au moyen d'au moins les unes parmi les données de nœud, les premières données de détection obtenues par l'intermédiaire d'une unité de détection (140) de l'objet mobile, et les secondes données de détection obtenues par l'intermédiaire du capteur de positionnement (200), dans lequel l'unité de détection de l'objet mobile comprend un accéléromètre et un gyroscope;
la génération et l'affichage (S200) d'une première interface utilisateur de correction, IU, se déplaçant dans une première direction dans laquelle l'objet mobile se déplace, sur la base de premières données de positionnement de l'objet mobile à un premier instant, la première IU de correction étant affichée, sur une unité d'affichage (150); (150), une vitesse étant corrigée en comparaison avec une vitesse réelle de l'objet mobile entre un premier nœud de départ et un premier nœud de fin; et
la détermination (S300) d'une opération d'affichage suivante en déterminant si l'objet mobile tourne au niveau du premier nœud d'extrémité à l'aide des informations de rotation incluses dans les premières données de détection, lesdites informations de rotation comprenant des informations concernant un angle de roulis, un angle de tangage et un angle de lacet de l'objet mobile, ainsi que des informations concernant la vitesse,
dans lequel la génération et l'affichage (S200) de la première IU de correction consiste à:

déterminer un premier nœud de départ sur la base des premières données de positionnement;

déterminer un premier nœud cible auquel les premières données de positionnement obtenues à l'aide des données de nœud répondent à une valeur de référence prédéfinie;

déterminer un premier nœud d'extrémité sur la base du premier nœud cible; et

générer et afficher la première IU de correction affichée à une vitesse uniforme entre le premier nœud de départ et le premier nœud de fin.

2. Procédé d'affichage d'écran selon la revendication 1, dans lequel, lorsqu'il est déterminé que l'objet mobile ne tourne pas lors de la détermination de l'opération d'affichage suivante (S300-N), l'opération d'affichage suivante consiste à générer et à afficher une deuxième IU de correction se déplaçant d'un deuxième nœud de départ s'étendant dans la première direction vers un deuxième nœud de fin, dans lequel la génération et l'affichage de la deuxième IU de correction consiste à:

remplacer (S310) le premier nœud de fin par le deuxième nœud de départ et déterminer un deuxième nœud cible adjacent au premier nœud de fin comme deuxième nœud de fin; et

générer et afficher (S320) la deuxième IU de correction affichée à une vitesse uniforme entre le deuxième nœud de départ et le deuxième nœud de fin.

3. Procédé d'affichage d'écran selon la revendication 1, dans lequel, lorsqu'il est déterminé que l'objet mobile tourne lors de la détermination de l'opération d'affichage suivante (S300-Y), l'opération d'affichage suivante consiste à générer et à afficher une troisième IU de correction se déplaçant dans une deuxième direction différente de la première direction, dans lequel la génération et l'affichage de la troisième IU de correction consiste à:

générer (S330) une troisième/première UI de correction se déplaçant dans la première direction depuis le premier nœud de départ vers le premier nœud de fin; et

générer (S340) une troisième/seconde de correction se déplaçant dans la deuxième direction vers un troisième nœud de fin déterminé sur la base d'un troisième nœud cible adjacent au premier nœud de fin dans la deuxième direction.

4. Procédé d'affichage d'écran selon la revendication 3, comprenant en outre la réception (S350) d'un signal de sélection pour un mode d'affichage, dans lequel le mode d'affichage comprend un mode de commutation d'objet dans lequel une image d'espace intérieur est fixe et une IU d'objet mobile se déplace, et un mode de commutation d'arrière-plan dans lequel l'IU d'objet mobile est fixe et l'image d'espace intérieur se déplace.

5. Procédé d'affichage d'écran selon la revendication 4, dans lequel la génération (S330) de la troisième/première IU de correction comprend la détermination comparative d'une relation de priorité entre le premier nœud de fin et un nœud suivant correspondant à des données de positionnement suivantes obtenues à un deuxième moment après le premier moment,

dans lequel, à la suite de la détermination comparative, lorsqu'il est déterminé que le nœud suivant est situé avant le premier nœud de fin dans la première direction, la génération et l'affichage de la troisième IU de correction comprennent en outre, entre la génération de la troisième/première IU de correction et la génération de la troisième/deuxième IU de correction, la rotation de l'une parmi l'IU d'objet mobile et l'image d'espace intérieur selon le mode d'affichage sélectionné en fonction du signal de sélection basé sur le premier nœud de fin.

6. Procédé d'affichage d'écran selon la revendication 4, dans lequel la génération (S330) de la troisième/première IU de correction comprend la détermination comparative d'une relation de priorité entre le premier nœud de fin et un nœud suivant correspondant à des données de positionnement suivantes obtenues au deuxième moment après le premier moment,

dans lequel, à la suite de la détermination comparative, lorsqu'il est déterminé que le nœud suivant précède le premier nœud de fin dans la première direction, la génération de la troisième/première IU de correction consiste en outre à:

générer une cinquième IU de correction pour actualiser la position de l'objet mobile vers le premier nœud de fin; et

faire tourner l'une parmi l'IU d'objet mobile et l'image de l'espace intérieur en fonction du mode d'affichage sélectionné selon le signal de sélection basé sur le premier nœud de fin.

7. Procédé d'affichage d'écran selon la revendication 1, dans lequel au moins une action parmi la génération et l'affichage (S200) de la première IU de correction et la détermination (S300) de l'opération d'affichage suivante consiste à:

calculer une distance entre une position d'une IU d'objet mobile affichée sur la base des premières données de positionnement et une position correspondant aux premières données de positionnement; et

réaliser une opération de correction d'arrêt de l'IU d'objet mobile lorsque la position de l'IU d'objet mobile précède la position correspondant aux premières données de positionnement d'une certaine distance.

8. Dispositif d'affichage d'écran (100) correspondant à un objet mobile et exécutant un procédé en fonction d'un positionnement intérieur, comprenant

une unité de commande (110),
une unité de détection (140) de l'objet mobile, et une unité d'affichage (150),
dans lequel l'unité de commande (110) est conçue pour:

définir (S100) des données de nœud comprenant des informations concernant la position d'un capteur de positionnement installé dans un espace intérieur, selon une règle prédéfinie, sur un trajet de déplacement sur lequel l'objet mobile peut se déplacer par rapport à l'espace intérieur, la position du nœud indiquant la position du capteur de positionnement;

obtenir des données de positionnement de l'objet mobile au moyen d'au moins les unes parmi les données de nœud, les premières données de détection obtenues par l'intermédiaire de l'unité de détection (140) de l'objet mobile, et les secondes données de détection obtenues par l'intermédiaire du capteur de positionnement (200), dans lequel l'unité de détection de l'objet mobile comprend un accéléromètre et un gyroscope;

générer et afficher une première interface utilisateur de correction, IU, se déplaçant dans la première direction dans laquelle l'objet mobile se déplace, sur la base de premières données de positionnement de l'objet mobile à un premier instant, la première IU de correction étant affichée, sur une unité d'affichage (150), une vitesse étant corrigée en comparaison avec une vitesse réelle de l'objet mobile d'un premier nœud de départ à un premier nœud de fin; et

déterminer une opération d'affichage ultérieure en déterminant si l'objet mobile tourne au niveau du premier nœud de fin à l'aide des informations de rotation incluses dans les premières données de détection, lesdites informations de rotation comprenant des informations concernant un angle de roulis, un angle de roulis et un angle de lacet de l'objet mobile, ainsi que des informations concernant la vitesse, dans lequel, lorsque l'unité de commande (110) génère et affiche la première IU de correction, l'unité de commande (110) est en outre configurée pour:

déterminer un premier nœud de départ sur la base des premières données de positionnement;

déterminer un premier nœud cible auquel les premières données de positionnement obtenues à l'aide des données de nœud répondent à une valeur de référence prédéfinie;

déterminer un premier nœud d'extrémité sur la base du premier nœud cible; et

générer et afficher la première IU de correction affichée à une vitesse uniforme entre le premier nœud de départ et le premier nœud de fin.

9. Dispositif d'affichage d'écran (100) selon la revendication 8, dans lequel, lorsque l'unité de commande (110) détermine que l'objet mobile ne tourne pas lors de la détermination de l'opération d'affichage suivante, l'opération d'affichage suivante consiste à générer et à afficher une deuxième IU de correction se déplaçant d'un deuxième nœud de départ s'étendant dans la première direction vers un deuxième nœud de fin,
dans lequel l'unité de commande (110) est en outre conçue pour:

remplacer le premier nœud de fin par le deuxième nœud de départ et déterminer un deuxième nœud cible adjacent au premier nœud de fin comme deuxième nœud de fin; et

générer la deuxième IU de correction affichée à une vitesse uniforme entre le deuxième nœud de départ et le deuxième nœud de fin.

10. Dispositif d'affichage d'écran (100) selon la revendication 8, dans lequel, lorsque l'unité de commande (110) détermine que l'objet mobile tourne lors de la détermination de l'opération d'affichage suivante, l'opération d'affichage suivante consiste à générer et à afficher une troisième IU de correction se déplaçant dans une deuxième direction différente de la première direction,
dans lequel, lorsque l'unité de commande (110) génère la troisième IU de correction, l'unité de commande (110) est en outre configurée pour:

générer une troisième/première IU de correction se déplaçant dans la première direction depuis le premier nœud de départ vers le premier nœud de fin; et

générer une troisième/deuxième de correction se déplaçant dans la deuxième direction vers un troisième nœud de fin déterminé sur la base d'un troisième nœud cible adjacent au premier nœud de fin dans la deuxième direction.

11. Dispositif d'affichage d'écran (100) selon la revendication 10, le dispositif d'affichage d'écran (100) recevant un signal de sélection pour un mode d'affichage,

dans lequel le mode d'affichage comprend un mode de commutation d'objet dans lequel une image d'espace intérieur est fixe et une IU d'objet mobile se déplace, et un mode de commutation d'arrière-plan dans lequel l'IU d'objet mobile est fixe et l'image d'espace intérieur se déplace.

12. Dispositif d'affichage d'écran (100) selon la revendication 11, dans lequel l'unité de commande (110) génère la troisième/première IU de correction, l'unité de commande (110) est en outre configuré pour la détermination comparative d'une relation de priorité entre le premier nœud de fin et un nœud suivant correspondant à des données de positionnement suivantes obtenues à un deuxième moment après le premier moment,

dans lequel, à la suite de la détermination comparative, lorsqu'il est déterminé que le nœud suivant est situé avant le premier nœud de fin dans la première direction, l'unité de commande (110) est en outre configurée pour effectuer, après la génération de la troisième/première IU de correction et avant la génération de la troisième/deuxième IU, une opération de rotation de l'une parmi l'IU d'objet mobile et l'image d'espace intérieur selon le mode d'affichage sélectionné en fonction du signal de sélection basé sur le premier nœud de fin.

13. Dispositif d'affichage d'écran (100) selon la revendication 11, dans lequel l'unité de commande (110) génère la troisième/première IU de correction, l'unité de commande (110) est en outre configurée pour la détermination comparative d'une relation de priorité entre le premier nœud de fin et un nœud suivant correspondant à des données de positionnement suivantes obtenues au deuxième moment après le premier moment,

dans lequel, à la suite de la détermination comparative, lorsqu'il est déterminé que le nœud suivant précède le premier nœud de fin dans la première direction, l'unité de commande (110) est en outre configurée pour:

générer une cinquième IU de correction pour actualiser la position de l'objet mobile vers le premier nœud de fin; et
réaliser une opération de rotation de l'une parmi l'IU d'objet mobile et l'image de l'espace intérieur en fonction du mode d'affichage sélectionné selon le signal de sélection basé sur le premier nœud de fin.

14. Dispositif d'affichage d'écran (100) selon la revendication 8, dans lequel l'unité de commande (110) réalise au moins l'une des opérations d'affichage de la première IU de correction et l'opération d'affichage suivante, l'unité de commande (110) est en outre configurée pour:

calculer une distance entre une position d'une IU d'objet mobile affichée sur la base des premières données de positionnement et une position correspondant aux premières données de positionnement; et
réaliser une opération de correction d'arrêt de l'IU d'objet mobile lorsque la position de l'IU d'objet mobile précède la position correspondant aux premières données de positionnement d'une certaine distance.

FIG. 1

# FIG. 2

# FIG. 3

```
                                           ┌─ 140
        ┌──────────────────────────────────┐
        │                          ┌─ 141   │
        │   ┌──────────────────────────┐    │
        │   │      ACCELEROMETER       │    │
        │   └──────────────────────────┘    │
        │                          ┌─ 142   │
        │   ┌──────────────────────────┐    │
        │   │        GYROSCOPE         │    │
        │   └──────────────────────────┘    │
        │                          ┌─ 143   │
        │   ┌──────────────────────────┐    │
        │   │   MAGNETIC FIELD SENSOR  │    │
        │   └──────────────────────────┘    │
        │                                   │
        └───────────────────────────────────┘
```

# FIG. 4

MOVEMENT DIRECTION (400 → 410)

EP 4 249 852 B1

# FIG. 5

FIG. 6

EP 4 249 852 B1

FIG. 7

# FIG. 8

FIG. 9

# FIG. 10

# FIG. 11

# FIG. 12

# FIG. 13

START

SET NODE DATA ⎯ S100

GENERATE AND DISPLAY FIRST CORRECTION UI MOVING IN
FIRST DIRECTION IN WHICH MOVING OBJECT MOVES,
BASED ON FIRST POSITIONING DATA OF MOVING OBJECT
AT FIRST POINT IN TIME ⎯ S200

Ⓐ

DETERMINE SUBSEQUENT DISPLAY OPERATION BY
DETERMINING WHETHER MOVING OBJECT ROTATES
AT FIRST TARGET NODE ⎯ S300

Ⓑ

END

**FIG. 14**

S300

A

S300-Y

S350

RECEIVE SELECTION SIGNAL
FOR SELECTING DISPLAY MODE

S300-N

S310

REPLACE FIRST END NODE WITH SECOND
START NODE AND DETERMINE SECOND
TARGET NODE ADJACENT TO FIRST END
NODE AS SECOND END NODE

S330

GENERATE THIRD-FIRST CORRECTION
UI MOVING IN FIRST DIRECTION

S320

GENERATE SECOND CORRECTION UI
DISPLAYED AT UNIFORM SPEED FROM
SECOND START NODE TO SECOND END NODE

S340

GENERATE THIRD-SECOND CORRECTION
UI MOVING IN SECOND DIRECTION

S360-N

SUBSEQUENT
POSITIONING DATA NOT
COLLECTED FOR CERTAIN
TIME OR MORE?

S360

S360-Y

B

EP 4 249 852 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100978060 B1

- KR 20190112929 A